# EUROPEAN PATENT SPECIFICATION

(11) **EP 2 596 859 B1**
(45) Date of publication and mention of the grant of the patent: **09.10.2019**
(21) Application number: 11809937.3
(22) Date of filing: 15.07.2011
(51) Int. Cl.: B01J 4/00, B01J 19/24, B01J 10/00, B01F 3/04, B01F 5/00

(54) **GAS-LIQUID REACTORS WITH VORTEX MIXING CHAMBER**
GAS-FLÜSSIG-REAKTOREN MIT EINER WIRBELMISCHKAMMER
RÉACTEURS GAZ-LIQUIDE AVEC CHAMBRE DE MÉLANGE DE TYPE VORTEX

(30) Priority: 23.07.2010 RU 2010130972; 21.07.2010 RU 2010130727
(43) Date of publication of application: 29.05.2013
(73) Proprietor: Otkrytoe Aktsionernoe Obschestvo Research & Design Institute Of Urea And Organic Synthesis Products (OAO NIIK), Nizhny Novgorod Region 606008 (RU)
(72) Inventor: SERGEEV, Yury Andreevich, Nizhny Novgorod obl. 606037 (RU); VOROBYEV, Aleksandr Andreevich, Nizhny Novgorod Region 606007 (RU); ANDERZHANOV, Rinat Venerovich, Nizhny Novgorodskaya obl. 606000 (RU); CHIRKOV, Aleksandr Vasilievich, Nizhny Novgorodsksaya obl. 606002 (RU); GOLOVIN, Yury Aleksandrovich, Nizhny Novgorodsksaya obl. 606015 (RU); SOLDATOV, Aleksei Vladimirovich, Nizhny Novgorodskaya obl. 606025 (RU); PROKOPYEV, Aleksandr Alekseevich, Nizhny Novgorodskaya obl. 606008 (RU); KUZNETSOV, Nikolai Mikhailovich, Nizhny Novgorodskaya obl. 606000 (RU); KOSTIN, Oleg Nikolaevich, Nizhny Novgorod 603010 (RU); ESIN, Igor Veniaminovich, Nizhny Novgorod Region 606000 (RU)
(74) Representative: Vossius & Partner Patentanwälte Rechtsanwälte mbB
(86) International application number: PCT/RU2011/000525
(87) International publication number: WO 2012/011844

(56) References cited:
- BY-C1- 9 335
- BY-C1- 9 335
- DE-A1-102004 027 398
- JP-A- 54 057 469
- RU-C1- 2 009 710
- RU-C1- 2 095 134
- RU-C1- 2 095 134
- RU-C1- 2 203 132
- RU-C1- 2 203 132
- US-A- 2 942 043
- US-A- 4 464 314

## Description

### Field of the Invention

The invention relates to implementation of chemical processes taking place in gas-liquid media, namely to the design of gas-liquid reactor with rising unidirectional phase movement.

### Background of the Invention

Effective carrying out of processes in gas-liquid column reactors with rising unidirectional phase movement is possible only in the conditions of uniform distribution of speeds, sizes of bubbles and gas content in the cross-section of rising gas-liquid flow. The distribution depends on design features of a reactor.

A gas-liquid reactor is known comprising vertical cylindrical body with two inlet pipes for liquid reactants and an inlet pipe for gaseous reactant, located in the bottom part of the reactor, with outlet pipes for reaction products, located in the top part of the reactor, and a cap mixing device located over pipes of reactants inlet (SU 1088779, B01J 10/00, 19/00, 1984). Feedstock reactants are introduced into the reactor by separate jet-axial flows through three pipes. Having passed the mixing device, the flows enter the reaction space in the form of a mixture.

The disadvantage of this design structure of the reactor is low intensity of mixing the reactants and insufficient dispersion degree of the gas in the bottom part of the reactor as a result of a separate introduction of reactants and low turbulization of the flow at the outlet from the mixer.

A gas-liquid reactor is also known comprising vertical cylindrical body with pipes for inlet of liquid and gaseous reactants, with a pipe for outlet of reaction products and a pipe for outlet of off-gases, distribution device for supply of gaseous reactant located in the bottom part of the reactor, a hollow conic surface installed below the pipe for reaction products outlet facing the reactor bottom with its open basis, a cyclonic ejector installed under the conic surface, having a tangential pipe connected to one of the inlet pipes for liquid reactant, a nozzle directed towards the bottom of the reactor, and a coaxial pipe located inside an ejector, the top end of the pipe being connected to the space of the hollow conic surface, its lower end being located at the level of the nozzle outlet over the distribution device for supply of a gaseous reactant (SU 1648544, B01J 19/00, B01D 53/18, 1991). The present design of a reactor is characterized by non-uniform distribution of gas in the volume of liquid because of separate inlet of reactants and specific design of the gas distribution device.

The closest to the variant embodiments of the proposed reactor from point of view of the technical essence are variant embodiments of the known gas-liquid reactor (RU 2256495, B01J 10/00, 2005). According to one of its variant embodiments, a gas-liquid reactor is known comprising a vertical body with inlet pipes for reactants and outlet pipes for reaction products, a mixer located in the bottom part of the body including a coaxial pipe and a vortex chamber having a tangential inlet pipe, connected to the inlet pipe for the first reactant, and an axial outlet pipe, the axial outlet pipe being directed towards the bottom of the reactor, the coaxial pipe is introduced into the cylindrical body of the vortex chamber, the top end of the coaxial pipe is connected to the inlet pipe for the second reactant.

According to another variant embodiment, a gas-liquid reactor is known comprising the vertical body with inlet pipes for reactants and outlet pipes for reaction products, a mixer located in the bottom part of the body including at least two consecutively connected coaxial vortex chambers having tangential inlet pipes connected to inlet pipes for reactants, and axial outlet pipes, the axial outlet pipe of each foregoing chamber being introduced into cylindrical body of next chamber, axial outlet pipes being directed towards the reactor bottom.

The known gas-liquid reactor in the both variant embodiments provides a certain dispersion degree of reactants at their mixing due to movement of reactants in the mixer in the form of a multilayered flow with concentric rotating layers of a relatively small thickness and due to subsequent withdrawal of the flow into the reactor space. Such character of the flow movement provides desired low degree of mutual dispersion of layers at their movement in the mixer and, at the same time, their certain mutual dispersion at the flow withdrawal into the reactor space.

BY 9335, RU 2203192 C1, RU 2095134 disclose gas-liquid reactors with mixing chambers. US 2942043 A and DE 102004027398 A1 disclose vessels having an inclined tangential inlet.

### Summary of the Invention

The problem to be solved by the present invention consists in improvement of heat-transfer and mass-transfer at the reactants interaction.

The problem is solved by gas liquid reactors according to claim 1 and 9.

Four variant embodiments of gas-liquid reactor design are offered. The first and second variant embodiments describe the gas-liquid reactor according to claim 1, the third and fourth variant embodiments describe the gas-liquid reactor according to claim 9.

In the first variant embodiment, the gas-liquid reactor is proposed comprising a vertical body with inlet pipes for reactants and outlet pipes for reaction products, a mixer located in the bottom part of the body including a coaxial pipe and the vortex chamber having a tangential inlet pipe connected to the inlet pipe for the first reactant, and the axial outlet pipe directed towards the reactor bottom, the coaxial pipe being introduced into the cylindrical body of the vortex chamber, the top end of the coaxial pipe being connected to the inlet pipe for the second reactant, characterized in that the axial outlet pipe of the mixer is fitted with a diffuser, the tangential inlet pipe is inclined towards the mixer body in the opposite direction of outlet opening of the axial outlet pipe by an angle of 15° to 20° to the horizontal.

Depending on quantity of interacting reactant flows, the mixer may also contain at least one additional vortex chamber, coaxial to the first one and consecutively connected with it, having a tangential inlet pipe and an axial outlet pipe, an axial outlet pipe of each previous chamber being entered into the cylindrical body of the subsequent chamber. The tangential inlet pipe of at least one additional chamber may to be inclined towards the mixer body in the opposite direction of outlet opening of the axial outlet pipe, in the same way as in the main chamber. The bottom part of the reactor may contain a baffle located near to the bottom of the reactor opposite to the outlet pipe of the mixer, and an additional baffle concentric to the reactor body in the mixer location area.

In the second variant, the gas-liquid reactor is proposed comprising the vertical body with inlet pipes for reactants and outlet pipe for reaction products, the mixer located in the bottom part of the body including at least two consecutively connected coaxial vortex chambers having tangential inlet pipes connected to the inlet pipes for reactants, and the axial outlet pipes directed towards the bottom of the reactor, the axial outlet pipe of each foregoing chamber being introduced into cylindrical body of next chamber, characterized in that the axial outlet pipe of the mixer is fitted with a diffuser, at least one tangential inlet pipe is inclined towards the mixer body in the opposite direction of outlet opening of the axial outlet pipe.

The bottom part of the reactor, as well as in the first variant embodiment, may contain the baffle located near to the bottom of the reactor opposite to the outlet pipe of the mixer, and an additional baffle concentric to the reactor body in the area of the mixer location.

In the third variant, the gas-liquid reactor is proposed comprising the vertical body with inlet pipes for reactants and outlet pipe for reaction products, the mixer located in the bottom part of the body including the coaxial pipe and the vortex chamber having a tangential inlet pipe connected to the inlet pipe for the first reactant, and the axial outlet pipe, the coaxial pipe being introduced into the cylindrical body of the vortex chamber and connected to the inlet pipe for the second reactant, characterized in that the axial outlet pipe of the mixer is directed upwards, the tangential inlet pipe is inclined towards the mixer body in the opposite direction of outlet opening of the axial outlet pipe by an angle of 15° to 20° to the horizontal, the reactor contains a cylindrical shell concentric to the reactor body and wherein the mixer is located inside the cylindrical shell, and the shell diameter being of (0.6-0.9)D, where D is inner diameter of the body.

The axial outlet pipe of the mixer may be fitted with a diffuser. The mixer may contain at least one additional vortex chamber, coaxial to the first one and consecutively connected with it, having the tangential inlet pipe and an axial outlet pipe, and the axial outlet pipe of each foregoing chamber being introduced into cylindrical body of next chamber. The tangential inlet pipe at least of one additional chamber may be inclined towards the mixer body in the opposite direction of outlet opening of the axial outlet pipe, in the same way as in the main chamber.

In the fourth variant embodiment, the gas-liquid reactor is proposed comprising the vertical body with inlet pipes for reactants and outlet pipe for reaction products, the mixer located in the bottom part of the body including at least two consecutively connected coaxial vortex chambers having tangential inlet pipes connected to the inlet pipes for reactants, and axial outlet pipes, the axial outlet pipe of each foregoing chamber being introduced into cylindrical body of next chamber, characterized in that the axial outlet pipes are directed upwards, at least one tangential inlet pipe is inclined towards the mixer body in the opposite direction of outlet opening the axial outlet pipe, the reactor contains the cylindrical shell concentric to the reactor body covering the mixer, the shell diameter being of (0.6-0.9)D, where D is inner diameter of the body. The axial outlet pipe of the mixer may be fitted with a diffuser.

Technical result which may be obtained at application of the invention is the increase of dispersion intensity of interacting operating phases and uniformity of distribution of reactants in the two-phase flow so formed. In the first and second variant embodiments, this result is obtained due to combination of rotary movement of flows in vortex chambers along an abrupt spiral, which movement being caused by an inclined arrangement of tangential inlet pipes, and fast expansion of the flow at the outlet from the mixer due to the diffuser action. In the third and fourth variant embodiments where the axial outlet pipe is directed upwards and the reactor contains a cylindrical shell covering the mixer, the result is obtained due to combination of rotary movement of flows in the vortex chambers along abrupt spiral, which movement being caused by an inclined arrangement of tangential inlet pipes, and interactions of the flow from the outlet pipe with the gas-liquid mixture circulating between the spaces inside and outside of the shell because of the difference of the densities of the mixture in these spaces. In these variant embodiments a fast expansion of flows at the outlet from the mixer due to the diffuser action increases the intensity of phase dispersion.

For reactants dispersion quality improvement in all the variant embodiments, it is preferable to arrange tangential inlet pipes of the chambers so that the direction of rotation of the flows in all the chambers is to be identical. The bottom end of the coaxial pipe, as per the first variant embodiment, or its top end, as per the third variant embodiment, and axial outlet pipes of the vortex chambers, as per all the variant embodiments, is preferable to be introduced into the cylindrical body of the subsequent chamber so that the end of the pipe is to be located along the direction of the reactants movement after the inlet opening of the tangential inlet pipe and does not reach the end of the outlet axial pipe of the subsequent chamber. It is also preferable for the mixer to contain the vortex chambers with the diameter consecutively increasing along the movement of the reactants. At application of the proposed gas-liquid reactor as a reactor of synthesis of urea, the mixer in the first and third variant embodiments may contain one or two vortex chambers, and in the second and the fourth embodiments - two or three vortex chambers.

### Description of the Preferred Embodiments

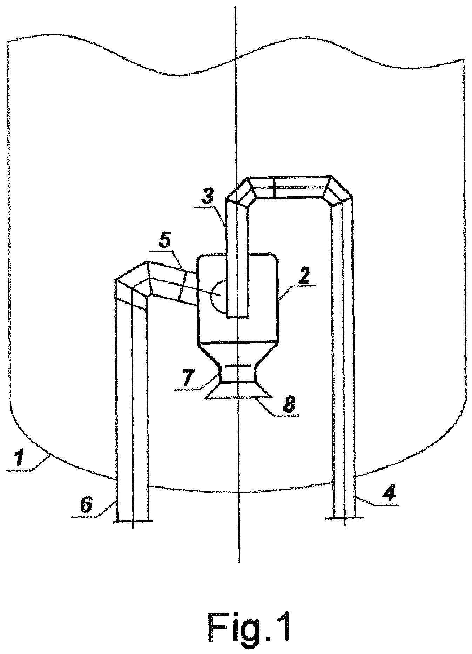

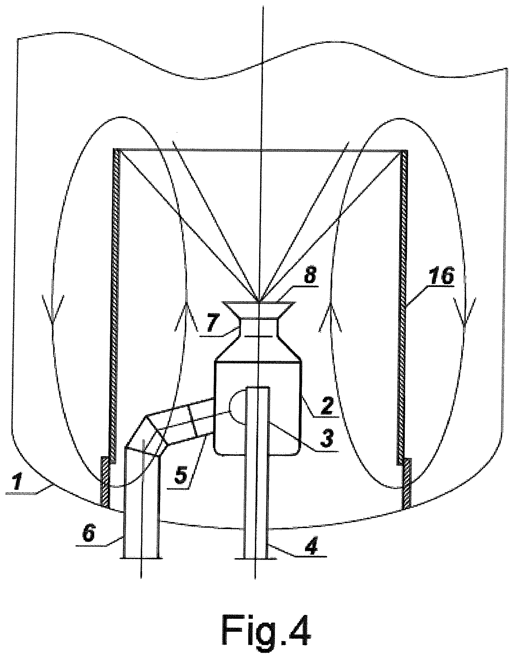

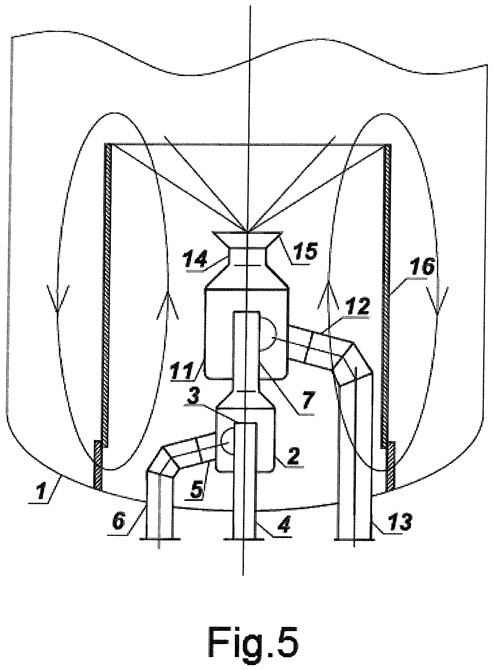

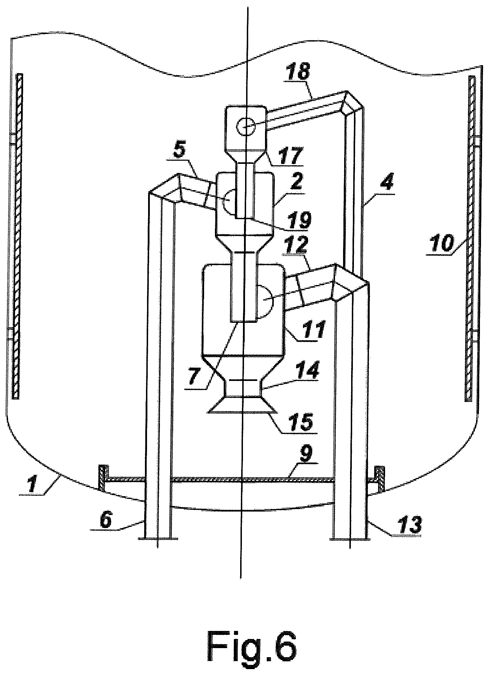

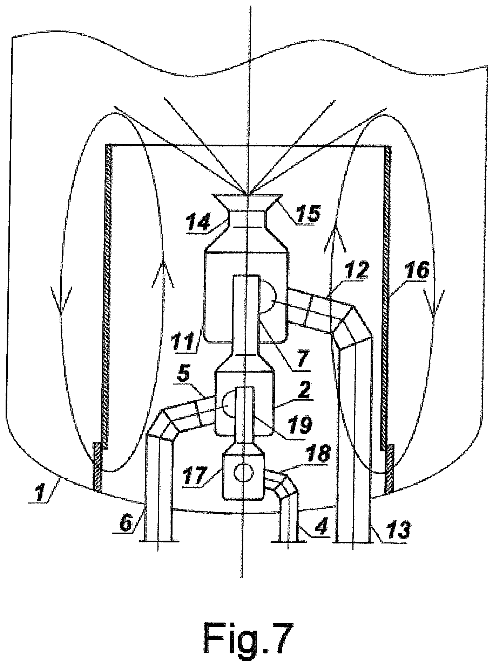

The essence of the variant embodiments of the invention is illustrated in attached Figs. 1-7 in which the bottom part of the gas-liquid reactor in a longitudinal section is shown which is a particular embodiment of the proposed design, in Figs. 1-3 by the first variant embodiment, in Fig. 6 by the second variant embodiment, in Figs. 4, 5 by the third variant embodiment, in Fig. 7 by the fourth variant embodiment.

According to the Fig. 1, the gas-liquid reactor includes body 1 and the mixer located in the bottom part of the body consisting of the vortex chamber 2 and coaxial pipe 3 connected to the inlet pipe 4 for gaseous reactant. The vortex chamber contains the tangential inlet pipe 5 inclined in relation to the body of the mixer to the side opposite to the outlet opening of the axial outlet pipe, by an angle of 15-20° to the horizontal, and connected to the inlet pipe 6 for liquid reactant, and the outlet axial pipe 7 turned towards the bottom of the reactor. The bottom end of the coaxial pipe 3 is located along the direction of the reactants movement after the inlet opening of the tangential inlet pipe 5 and does not reach the end of the outlet axial pipe 7. The outlet axial pipe 7 is fitted with diffuser 8.

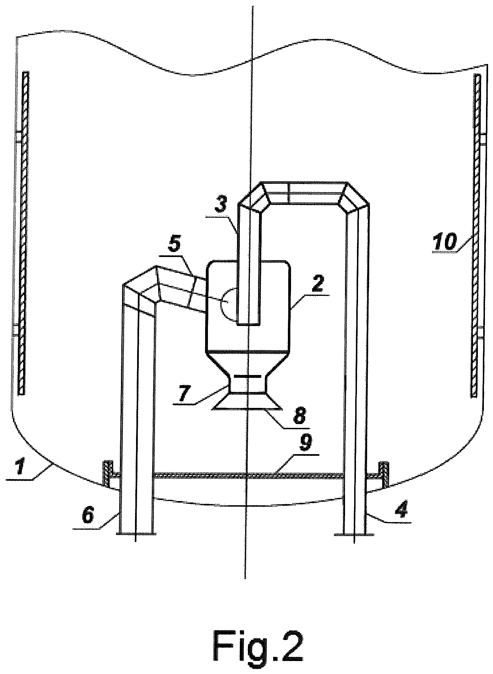

The gas-liquid reactor represented in Fig. 2 is different from the reactor represented in Fig. 1 by the fact that a protective baffle 9 is located under diffuser 8 near to the reactor bottom, and another protective baffle 10 which is concentric to the wall of the reactor body is located at the cylindrical portion of the bottom part of the reactor in the mixer location area.

When operating the reactors represented in Figs. 1, 2, the liquid reactant from pipe 6 is introduced through tangential inlet 5 into vortex chamber 2 where it gets an intensive spiral curled movement. The gaseous reactant is introduced from pipe 4 and coaxial pipe 3 in the vortex chamber 2. As a result of the spiral curled movement of the liquid reactant flow in vortex chamber 2, the structured rotating flow is formed in which by means of centrifugal forces the reactants are distributed as per density, the gaseous reactant moves through the axial zone of outlet pipe 7, the liquid reactant moves through a peripheral zone. There is an intensive turbulent dispersion of the gaseous reactant and mixing of phases at the outlet from pipe 7 as a result of loss of hydrodynamic stability of the curled flow, the dispersion becoming even more intensive at the presence of diffuser 8. An additional dispersion of the flow takes place due to location of the mixer near to the bottom. The bubbles of the gas formed at disintegration of the curled jet scatter in different angles filling uniformly cross-section of the reactor including the areas directly adjoining to the bottom. A homogeneous rising gas-liquid flow with fine bubble structure is formed in the cross-section of the reactor beginning from the bottom. Formation of the peripheral stagnant zones which have been not filled in with dispersed gas and with not dispersed gas jets is thus excluded.

In the reactor represented in Fig. 2, the protective baffle 9 located under the outlet nozzle of the vortex mixer near to the bottom of the reactor, and the baffle of cylindrical form 10 located at the cylindrical portion of the bottom part of the reactor, make obstacle for the contact of the gas-liquid flow leaving the mixer with the material of the bottom and walls thus protecting them from deterioration which can take place in case if the gas-liquid flow has a considerable corrosion activity.

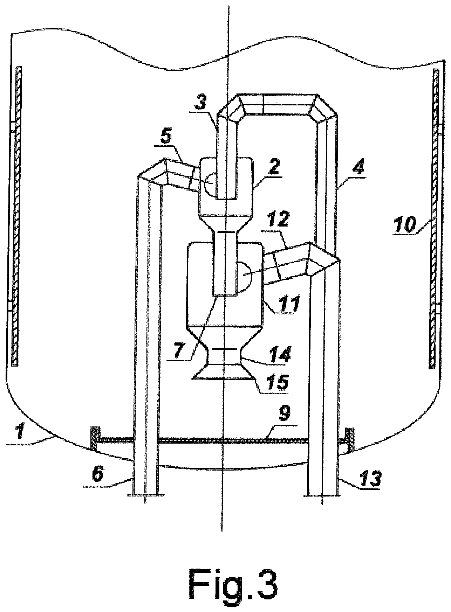

According to Fig. 3, the gas-liquid reactor includes body 1 and the mixer located in the bottom part of the body consisting of the upper and lower vortex chambers 2, 11 and the coaxial pipe 3 connected to the pipe for inlet of the gaseous reactant 4. Diameter of the vortex chamber 11 is more than the diameter of the vortex chamber 2. Vortex chambers 2 and 11 contain the tangential inlet pipes 5 and 12 inclined towards the mixer body in the opposite direction of outlet openings of axial outlet pipes, by angle of 15-20° to the horizontal, and connected to the pipes for inlet of liquid reactants 6 and 13, and outlet axial pipes 7 and 14 turned towards the reactor bottom. The outlet axial pipe 14 is fitted with diffuser 15. The tangential inlet pipes 5 and 12 are located so that the direction of rotation of the flows in the both chambers is to be identical. The lower end of coaxial pipe 3 is located along the direction of movement of reactants after the inlet opening of the tangential inlet pipe 5 and does not reach the end of outlet axial pipe 7. The bottom end of outlet axial pipe 7 is located along the direction of movement of reactants after the inlet opening of the tangential inlet pipe 12 and does not reach the end of the outlet axial pipe 14. The baffle 9 is located under diffuser 15 near to the reactor bottom. The baffle 10 is located at the cylindrical portion of the bottom part of the reactor. The reactor works similarly to the reactors represented in Figs. 1, 2, with the difference that the external layer of the second liquid reactant which is rotating unidirectionally with the flow of the first liquid reactant joins in the lower vortex chamber 11 to the structured rotating flow generated in the upper vortex chamber 2.

According to Fig. 4, gas-liquid reactor includes body 1 and the mixer located in the bottom part of the body consisting of the vortex chamber 2 and coaxial pipe 3 connected to the gaseous reactant inlet pipe 4. The vortex chamber contains the tangential inlet pipe 5 inclined in relation to the body of the mixer to the side opposite to the outlet opening of the axial outlet pipe, by angle of 15-20° to the horizontal, and connected to the liquid reactant inlet pipe 6, and the outlet axial pipe 7 turned upwards and fitted with diffuser 8. The top end of the coaxial pipe 3 is located in the direction of the reactants movement after the inlet opening of the tangential inlet pipe 5 and does not reach the end of outlet axial pipe 7. The mixer is located inside cylindrical shell 16, coaxial to body 1, the shell diameter being of (0.6-0.9)D where D is inner diameter of the body.

When operating the reactor represented in Fig. 4, the liquid reactant from pipe 6 is introduced through tangential inlet pipe 5 into vortex chamber 2 where it gets an intensive spiral curled movement. The gaseous reactant is introduced from pipe 4 and coaxial pipe 3 into vortex chamber 2. As a result of the spiral curled movement of the liquid reactant flow in vortex chamber 2, the structured rotating flow is formed, in which the reactants are distributed due to the centrifugal forces as per density, the gaseous reactant being introduced through the axial zone of outlet pipe 7, the liquid reactant being introduced through a peripheral zone thereof. Intensive turbulent dispersion of the gaseous reactant and mixing of phases take place at the outlet from pipe 7 to the diffuser 8 as a result of loss of hydrodynamic stability of the curled flow. The gas bubbles formed at disintegration of the curled jet scatter by different angles, uniformly filling in the reactor cross-section. Partial separation of the liquid phase takes place at the outlet of the flow from the space inside shell 16, and its circulation in the direction shown in Fig. 4 is arisen as a result of media density differences inside and outside of the shell. Interaction of the flow leaving diffuser 8 with the circulating flow provides increase of the degree of the phases mutual dispersion. In the reactor cross-section, a homogeneous rising gas-liquid flow with fine bubble structure is formed over the mixer. Thus, formation of the peripheral stagnant zones which have been not filled with dispersed gas, as well as formation of dispersed gas jets, is excluded.

According to Fig. 5, the gas-liquid reactor includes body 1 and the mixer located in the bottom part of the body, consisting of the upper and the lower vortex chambers 2, 11 and coaxial pipe 3 connected to the gaseous reactant inlet pipe 4. Diameter of the vortex chamber 11 is more than the diameter of the vortex chamber 2. Vortex chambers 2 and 11 comprise tangential inlet pipes 5 and 12 inclined towards the mixer body in the opposite direction of outlet openings of the axial outlet pipes, by angle of 15-20° to the horizontal, and connected to the liquid reactants inlet pipes 6 and 13, and outlet axial pipes 7 and 14 turned upwards. The outlet axial pipe 14 is fitted with diffuser 15. The tangential inlet pipes 5 and 12 are located so that the direction of rotation of the flows in both chambers is to be identical. The upper end of coaxial pipe 3 is located in the direction of the reactants movement after the inlet opening of the tangential inlet pipe 5 and does not reach the end of outlet axial pipe 7. The upper end of outlet axial pipe 7 is located in the direction of the reactants movement after the inlet opening of tangential inlet pipe 12 and does not reach the end of outlet axial pipe 14. The mixer is located inside cylindrical shell 16 coaxial with body 1, the shell diameter being of (0.6-0.9)D where D is inner diameter of the body.

The reactor works similarly to the reactor represented in Fig. 4, with the difference that the external layer of the second liquid reactant, rotating unidirectionally with the flow of the first liquid reactant, joins in the upper vortex chamber 11 to the structured rotating flow generated in the lower vortex chamber 2.

According to Fig. 6, gas-liquid reactor includes body 1 and the mixer located in the bottom part of the body, consisting of three vortex chambers 17, 2, 11. Diameter of vortex chamber of 2 is more than the diameter of the vortex chamber 17, and diameter of the vortex chamber 11 is more than diameter of the vortex chamber 2. Vortex chambers contain the tangential inlet pipes 18, 5, 12, inclined towards the mixer body in the opposite direction of outlet openings of axial outlet pipes, by angle 15-20° to the horizontal, and connected accordingly to the gaseous reactant inlet pipe 4 and liquid reactant inlet pipes 6 and 13, and outlet axial pipes 19, 7, 14, turned towards the reactor bottom. The lower ends of outlet axial pipes 19 and 7 are located in the direction of the reactants movement after the inlet opening s of tangential inlet pipes 5 and 12 and do not reach the ends of outlet axial pipes 7 and 14 (accordingly). The outlet axial pipe 14 is fitted with a diffuser 15. Baffle 9 is located under diffuser 15 near to the reactor bottom. Baffle 10 is located on the cylindrical portion of the bottom part of the reactor. The reactor works similarly to the reactor represented in Fig. 3 with the difference that the structured rotating flow is formed in vortex chambers 17, 2 and 11 as a result of unidirectional rotation of two liquid reactants as well as gas.

According to Fig. 7 the gas-liquid reactor includes body 1 and the mixer located in the bottom part of the body, consisting of three vortex chambers 17, 2, 11. Diameter of the vortex chamber 2 is more than diameter of vortex chamber 17, and diameter of vortex chamber 11 is more than diameter of vortex chamber 2. Vortex chambers contain tangential inlet pipes 18, 5, 12, inclined towards the mixer body in the opposite direction of outlet openings of axial outlet pipes, by angle of 15-20 ° to the horizontal, and connected accordingly to the gaseous reactant inlet pipe 4 and liquid reactant inlet pipes 6 and 13, and outlet axial pipes 19, 7, 14, turned upwards. The upper ends of outlet axial pipes 19 and 7 are located in the direction of movement of reactants after the inlet opening s of tangential inlet pipes 5 and 12 and do not reach the ends of outlet axial pipes 7 and 14 (accordingly). Outlet axial pipe 14 is fitted with a diffuser 15. The mixer is located in a cylindrical shell 16 coaxial with body 1 and the shell diameter being of (0.6-0.9)D, where D is inner diameter of the body. The reactor works similarly to the reactor represented in fig. 5, with the difference that the structured rotating flow is formed in vortex chambers 17, 2 and 11 as a result of unidirectional rotation of two liquid reactants, as well as gas.

The reactors represented in Figs. 1-7 may be used as urea synthesis reactors. Thus, a gaseous reactant is carbon dioxide, and liquid reactants are ammonia and ammonium carbamate water-ammonium solution (carbon-ammonium salts solution) or their mixture.

### Industrial Applicability

The invention may be used in chemical, petrochemical and other industries, in particular, for industrial production of urea.

## Claims

1. Gas-liquid reactor including vertical body with inlet pipes for reactants and outlet pipes for reaction products, a mixer with a coaxial tube and vortex chamber located in the lower part of the body, the chamber having an axial outlet pipe and a tangential inlet pipe connected with inlet pipe of first reactant, the axial outlet pipe being directed towards reactor bottom, the coaxial tube being introduced into the cylindrical body of the vortex
chamber, upper end of the coaxial tube being connected to the inlet pipe of second reactant, **characterized in that** the axial outlet pipe of the mixer is fitted with a diffuser, the tangential inlet pipe is inclined towards the mixer body in the opposite direction of the outlet opening of the axial outlet pipe by an angle of 15° to 20° to the horizontal.

2. Gas-liquid reactor according to the Claim 1 **characterized in that** the lower end of the coaxial tube is located along the reactants' flow after inlet opening of the tangential inlet pipe and before the end of the axial outlet pipe.

3. Gas-liquid reactor according to the Claim 1 **characterized in that** the mixer comprises at least one additional vortex chamber consecutively connected with the first one and coaxial with it, the additional chamber having tangential inlet pipe and axial outlet pipe, the axial outlet pipe of each foregoing chamber being introduced into cylindrical body of next chamber.

4. Gas-liquid reactor according to the Claim 3 **characterized in that** the tangential inlet pipe of at least one additional vortex chamber is inclined towards the mixer body in the opposite direction of outlet opening of the axial outlet pipe by an angle of 15° to 20° to the horizontal.

5. Gas-liquid reactor according to the Claim 3 **characterized in that** the tangential inlet pipes of the chambers are located so that flows direction of rotation in the chambers is identical, the axial outlet pipe of each foregoing chamber being introduced into cylindrical body of next chamber so that its end is located along the reactants' flow after inlet opening of the tangential inlet pipe and before the end of the axial outlet pipe of the next chamber.

6. Gas-liquid reactor according to the Claim 3 **characterized in that** diameter of each vortex chamber is less than diameter of the vortex chamber being next along the reactants flow.

7. Gas-liquid reactor according to the Claim 1 **characterized in that** the lower end of the reactor contains a baffle located facing the outlet pipe of the mixer near the reactor bottom.

8. Gas-liquid reactor according to the Claim 7 **characterized in that** the reactor contains an additional baffle located concentric to the reactor body in the mixer location area.

9. Gas-liquid reactor including vertical body with inlet pipes for reactants and outlet pipes for reaction products and a mixer with a coaxial tube and vortex chamber located in the lower part of the body, the chamber having an axial outlet pipe and tangential inlet pipe connected with inlet pipe of first reactant, the coaxial tube being introduced into cylindrical body of the chamber, free end of the coaxial tube being connected with inlet pipe of second reactant, **characterized in that** the axial outlet pipe of the mixer is directed upwards, the tangential inlet pipe is inclined towards the mixer body in the opposite direction of outlet opening of the axial outlet pipe by an angle of 15° to 20° to the horizontal, the reactor includes a cylindrical shell being coaxial to the reactor body and wherein the mixer is located inside the cylindrical shell, and the shell diameter being of (0.6-0.9)D where D is inner diameter of the reactor body.

10. Gas-liquid reactor according to the Claim 9 **characterized in that** the axial outlet pipe of the mixer is fitted with a diffuser.

11. Gas-liquid reactor according to the Claim 9 **characterized in that** the upper end of the coaxial tube is located along the reactants' flow after inlet opening of the tangential inlet pipe and before the end of the axial outlet pipe.

12. Gas-liquid reactor according to the Claim 9 **characterized in that** the mixer comprises at least one additional vortex chamber being consecutively connected with the first one and coaxial with it, the additional chamber having axial outlet pipe and tangential inlet pipe, the axial outlet pipe of each foregoing chamber being introduced into cylindrical body of next chamber.

13. Gas-liquid reactor according to the Claim 12 **characterized in that** the tangential inlet pipe of at least one additional vortex chamber is inclined towards the mixer body in the opposite direction of the outlet opening of the axial outlet pipe by an angle of 15° to 20° to the horizontal.

14. Gas-liquid reactor according to the Claim 12 **characterized in that** the tangential inlet pipes of the chambers are located so that flows direction of rotation in the chambers is identical, the axial outlet pipe of each foregoing chamber is introduced into cylindrical body of next chamber so that its end is located along the reactants' flow after inlet opening of the tangential inlet pipe and before the end of the axial outlet pipe of the next chamber.

15. Gas-liquid reactor according to the Claim 12 **characterized in that** diameter of each vortex chamber is less than diameter of the vortex chamber being next along the reactants' flow.

## Patentansprüche

1. Gas-Flüssig-Reaktor, enthaltend vertikalen Körper mit Einlassrohren für Reaktanten und Auslassrohren für Reaktionsprodukte, einen Mischer mit einer koaxialen Röhre und Wirbelkammer, der sich in dem unteren Teil des Körpers befindet, wobei die Kammer ein axiales Auslassrohr und ein tangentiales Einlassrohr aufweist, das mit dem Einlassrohr des ersten Reaktanten verbunden ist, wobei das axiale Auslassrohr in Richtung des Reaktorbodens gerichtet ist, wobei die koaxiale Röhre in den zylindrischen Körper der Wirbelkammer eingeführt ist, wobei das obere Ende der koaxialen Röhre mit dem Einlassrohr des zweiten Reaktanten verbunden ist, **dadurch gekennzeichnet, dass** das axiale Auslassrohr des Mischers mit einem Diffusor ausgestattet ist, das tangentiale Einlassrohr in Richtung des Mischerkörpers in einem Winkel von 15° bis 20° zur Horizontalen geneigt ist, in der Richtung, die der Auslassöffnung des axialen Auslassrohrs entgegengesetzt ist.

2. Gas-Flüssig-Reaktor nach Anspruch 1, **dadurch gekennzeichnet, dass** sich das untere Ende der koaxialen Röhre entlang der Fließrichtung der Reaktanten nach der Einlassöffnung des tangentialen Einlassrohrs und vor dem Ende des axialen Auslassrohrs befindet.

3. Gas-Flüssig-Reaktor nach Anspruch 1, **dadurch gekennzeichnet, dass** der Mischer mindestens eine weitere Wirbelkammer umfasst, die in Reihe mit der ersten und koaxial mit derselben verbunden ist, wobei die weitere Kammer tangentiales Einlassrohr und axiales Auslassrohr aufweist, wobei das axiale Auslassrohr jeder vorherigen Kammer in den zylindrischen Körper der nächsten Kammer eingeführt ist.

4. Gas-Flüssig-Reaktor nach Anspruch 3, **dadurch gekennzeichnet, dass** das tangentiale Einlassrohr von mindestens einer zusätzlichen Wirbelkammer in Richtung des Mischerkörpers in einem Winkel von 15° bis 20° zur Horizontalen geneigt ist, in der Richtung, die der Auslassöffnung des axialen Auslassrohrs entgegengesetzt ist.

5. Gas-Flüssig-Reaktor nach Anspruch 3, **dadurch gekennzeichnet, dass** die tangentialen Einlassrohre der Kammern so platziert sind, dass die Fließrichtung der Rotation in den Kammern identisch ist, wobei das axiale Auslassrohr jeder vorherigen Kammer in den zylindrischen Körper der nächsten Kammer eingeführt ist, so dass sich dessen Ende entlang der Fließrichtung der Reaktanten nach der Einlassöffnung des tangentialen Einlassrohrs und vor dem Ende des axialen Auslassrohrs der nächsten Kammer befindet.

6. Gas-Flüssig-Reaktor nach Anspruch 3, **dadurch gekennzeichnet, dass** der Durchmesser jeder Wirbelkammer weniger als der Durchmesser der Wirbelkammer ist, die sich als nächstes entlang der Fließrichtung der Reaktanten, befindet.

7. Gas-Flüssig-Reaktor nach Anspruch 1, **dadurch gekennzeichnet, dass** das untere Ende des Reaktors ein Ablenkblech enthält, das so angeordnet ist, dass es gegenüber dem Auslassrohr des Mischers nahe des Reaktorbodens angeordnet ist.

8. Gas-Flüssig-Reaktor nach Anspruch 7, **dadurch gekennzeichnet, dass** der Reaktor ein weiteres Ablenkblech enthält, das konzentrisch zum Reaktorkörper in dem Bereich, in dem der Mischer sich befindet, angeordnet ist.

9. Gas-Flüssig-Reaktor, umfassend vertikalen Körper mit Einlassrohren für Reaktanten und Auslassrohren für Reaktionsprodukte und einen Mischer mit einer koaxialen Röhre und Wirbelkammer, der sich in dem unteren Teil des Körpers befindet, wobei die Kammer ein axiales Auslassrohr und tangentiales Einlassrohr aufweist, das mit dem Einlassrohr des ersten Reaktanten verbunden ist, wobei die koaxiale Röhre in den zylindrischen Körper der Kammer eingeführt ist, das freie Ende der koaxialen Röhre mit dem Einlassrohr des zweiten Reaktanten verbunden ist, **dadurch gekennzeichnet, dass** das axiale Auslassrohr des Mischers nach oben gerichtet ist, das tangentiale Einlassrohr in Richtung des Mischerkörpers in einem Winkel von 15° bis 20° zur Horizontalen geneigt ist, in der Richtung, die der Auslassöffnung des axialen Auslassrohrs entgegengesetzt ist, der Reaktor einen zylindrischen Mantel enthält, der koaxial zu dem Reaktorkörper ist und wobei der Mischer innerhalb des zylindrischen Mantels angeordnet ist und wobei der Manteldurchmesser (0,6-0,9)D beträgt, wobei D der innere Durchmesser des Reaktorkörpers ist.

10. Gas-Flüssig-Reaktor nach Anspruch 9, **dadurch gekennzeichnet, dass** das axiale Auslassrohr des Mischers mit einem Diffusor ausgestattet ist.

11. Gas-Flüssig-Reaktor nach Anspruch 9, **dadurch gekennzeichnet, dass** sich das obere Ende der koaxialen Röhre entlang der Fließrichtung der Reaktanten nach der Einlassöffnung des tangentialen Einlassrohrs und vor dem Ende des axialen Auslassrohrs befindet.

12. Gas-Flüssig-Reaktor nach Anspruch 9, **dadurch gekennzeichnet, dass** der Mischer mindestens eine weitere Wirbelkammer umfasst, die in Reihe mit der ersten und koaxial mit derselben verbunden ist, wobei die weitere Kammer ein axiales Auslassrohr und tangentiales Einlassrohr aufweist, wobei das axiale Auslassrohr jeder der vorherigen Kammern in den zylindrischen Körper der nächsten Kammer eingeführt ist.

13. Gas-Flüssig-Reaktor nach Anspruch 12, **dadurch gekennzeichnet, dass** das tangentiale Einlassrohr mindestens einer weiteren Wirbelkammer in Richtung des Mischerkörpers in einem Winkel von 15° bis 20° zur Horizontalen geneigt ist in der Richtung, die der Auslassöffnung des axialen Auslassrohrs entgegengesetzt ist.

14. Gas-Flüssig-Reaktor nach Anspruch 12, **dadurch gekennzeichnet, dass** die tangentialen Einlassrohre der Kammern so platziert sind, dass die Fließrichtung der Rotation in den Kammern identisch ist, das axiale Auslassrohr jeder vorherigen Kammer in den zylindrischen Körper der nächsten Kammer eingeführt ist, so dass sich dessen Ende entlang der Fließrichtung der Reaktanten nach der Einlassöffnung des tangentialen Einlassrohrs und vor dem Ende des axialen Auslassrohrs der nächsten Kammer befindet.

15. Gas-Flüssig-Reaktor nach Anspruch 12, **dadurch gekennzeichnet, dass** der Durchmesser jeder Wirbelkammer weniger als der Durchmesser der Wirbelkammer, die sich entlang der Fließrichtung der Reaktanten befindet, beträgt.

## Revendications

1. Réacteur gaz-liquide incluant un corps vertical avec des tuyaux d'entrée pour des réactifs et des tuyaux de sortie pour des produits de réaction, un mélangeur avec un tube coaxial et une chambre de turbulence disposé dans la partie inférieure du corps, la chambre présentant un tuyau de sortie axial et un tuyau d'entrée tangentiel connectés avec un tuyau d'entrée du premier réactif, le tuyau de sortie axial étant dirigé vers le fond du réacteur, le tuyau coaxial étant introduit dans le corps cylindrique de la chambre de turbulence, une extrémité supérieure du tuyau coaxial étant connectée avec un tuyau d'entrée du second réactif, **caractérisé en ce que** le tuyau de sortie axial du mélangeur est équipé d'un diffuseur, le tuyau d'entrée tangentiel est incliné vers le corps de mélangeur dans la direction opposée de l'ouverture de sortie du tuyau de sortie axial d'un angle de 15° à 20° par rapport à l'horizontale.

2. Réacteur gaz-liquide selon la revendication 1, **caractérisé en ce que** l'extrémité inférieure du tube coaxial est disposée le long de l'écoulement des réactifs après l'ouverture d'entrée du tuyau d'entrée tangentiel et avant l'extrémité du tuyau de sortie axial.

3. Réacteur gaz-liquide selon la revendication 1, **caractérisé en ce que** le mélangeur comprend au moins une chambre de turbulence supplémentaire consécutivement connectée avec la première et coaxiale avec celle-ci, la chambre supplémentaire présentant un tuyau d'entrée tangentiel et un tuyau de sortie axial, le tuyau de sortie axial de chaque chambre précédente étant introduit dans le corps cylindrique de la chambre suivante.

4. Réacteur gaz-liquide selon la revendication 3, **caractérisé en ce que** le tuyau d'entrée tangentiel d'au moins une chambre de turbulence supplémentaire est incliné vers le corps de mélangeur dans la direction opposée d'ouverture de sortie du tuyau de sortie axial d'un angle de 15° à 20° par rapport à l'horizontale.

5. Réacteur gaz-liquide selon la revendication 3, **caractérisé en ce que** les tuyaux d'entrée tangentiels des chambres sont disposés de sorte que la direction de rotation des écoulements dans les chambres est identique, le tuyau de sortie axial de chaque chambre précédente étant introduit dans le corps cylindrique de la chambre suivante de sorte que son extrémité est disposée le long de l'écoulement des réactifs après l'ouverture d'entrée du tuyau d'entrée tangentiel et après l'extrémité du tuyau de sortie axial de la chambre suivante.

6. Réacteur gaz-liquide selon la revendication 3, **caractérisé en ce que** le diamètre de chaque chambre de turbulence est inférieur au diamètre de la chambre de turbulence suivante le long de l'écoulement des réactifs.

7. Réacteur gaz-liquide selon la revendication 1, **caractérisé en ce que** l'extrémité inférieure du réacteur contient une chicane disposée face au tuyau de sortie du mélangeur à proximité du fond du réacteur.

8. Réacteur gaz-liquide selon la revendication 7, **caractérisé en ce que** le réacteur contient une chicane supplémentaire disposée de manière concentrique au corps de réacteur dans la surface de disposition du mélangeur.

9. Réacteur gaz-liquide incluant un corps vertical avec des tuyaux d'entrée pour des réactifs et des tuyaux de sortie pour les produits de réaction et un mélangeur avec un tube coaxial et une chambre de turbulence disposée dans la partie inférieure du corps, la chambre présentant un tuyau de sortie axial et un tuyau d'entrée tangentiel connectés avec un tuyau d'entrée du premier réactif, le tube coaxial étant introduit dans un corps cylindrique de la chambre, une extrémité libre du tube coaxial étant connectée avec un tuyau d'entrée du second réactif, **caractérisé en ce que** le tuyau de sortie axial du mélangeur est dirigé vers le haut, le tuyau d'entrée tangentiel est incliné vers le corps de mélangeur dans la direction opposée d'ouverture de sortie du tuyau de sortie axial d'un angle de 15° à 20° par rapport à l'horizontale, le réacteur inclut une enveloppe cylindrique étant coaxiale au corps de réacteur et dans lequel le mélangeur est disposé à l'intérieur de l'enveloppe cylindrique, et le diamètre d'enveloppe étant de (0,6-0,9)D où D est un diamètre interne du corps de réacteur.

10. Réacteur gaz-liquide selon la revendication 9, **caractérisé en ce que** le tuyau de sortie axial du mélangeur est équipé d'un diffuseur.

11. Réacteur gaz-liquide selon la revendication 9, **caractérisé en ce que** l'extrémité supérieure du tube coaxial est disposée le long de l'écoulement des réactifs après l'ouverture d'entrée du tuyau d'entrée tangentiel et avant l'extrémité du tuyau de sortie axial.

12. Réacteur gaz-liquide selon la revendication 9, **caractérisé en ce que** le mélangeur comprend au moins une chambre de turbulence supplémentaire étant consécutivement connectée avec la première et coaxiale avec celle-ci, la chambre supplémentaire présentant un tuyau de sortie axial et un tuyau d'entrée tangentiel, le tuyau de sortie axial de chaque chambre précédente étant introduit dans le corps cylindrique de la chambre suivante.

13. Réacteur gaz-liquide selon la revendication 12, **caractérisé en ce que** le tuyau d'entrée tangentiel d'au moins une chambre de turbulence supplémentaire est incliné vers le corps de mélangeur dans la direction opposée de l'ouverture de sortie du tuyau de sortie axial d'un angle de 15° à 20° par rapport à l'horizontale.

14. Réacteur gaz-liquide selon la revendication 12, **caractérisé en ce que** les tuyaux d'entrée tangentiels des chambres sont disposés de sorte que la direction de rotation des écoulements dans les chambres est identique, le tuyau de sortie axial de chaque chambre précédente est introduit dans le corps cylindrique de la chambre suivante de sorte que son extrémité est disposée le long de l'écoulement de réactifs après l'ouverture d'entrée du tuyau d'entrée tangentiel et avant l'extrémité du tuyau de sortie axial de la chambre suivante.

15. Réacteur gaz-liquide selon la revendication 12, **caractérisé en ce que** le diamètre de chaque chambre de turbulence est inférieur au diamètre de la chambre de turbulence le long de l'écoulement de réactifs.
